# FASCICULE DE BREVET EUROPEEN

(11) **EP 0 354 123 B1**
(45) Date de publication et mention de la délivrance du brevet: **22.09.1993**
(21) Numéro de dépôt: 89402199.7
(22) Date de dépôt: 02.08.1989
(51) Int. Cl.: F16K 31/40

(54) **Dispositif d'alimentation en fluide, à clapet pilote**
Flüssigkeitsversorgungseinrichtung mit Pilotventil
Fluid supply device with pilot valve

(30) Priorité: 02.08.1988 FR 8810423
(43) Date de publication de la demande: 07.02.1990
(73) Titulaire: INTERTECHNIQUE, F-78370 Plaisir (FR)
(72) Inventeur: Bardel, Michel, F-78310 Maurepas (FR); Beaussant, Raymond, F-91220 Bretigny (FR)
(74) Mandataire: Fort, Jacques

(56) Documents cités:
- FR-A- 2 425 599
- GB-A- 2 051 312
- US-A- 4 545 561
- PATENT ABSTRACTS OF JAPAN, vol. 5, no. 147 (M-88)[819], 17 septembre 1981; & JP-A-56 76 779 (MATSUSHITA DENKI SANGYO K.K.) 24-06-1981
- PATENT ABSTRACTS OF JAPAN, vol. 10, no. 291 (M-522)[2347], 3 octobre 1986; & JP-A-61 105 376 (TAIYO TEKKO K.K.) 23-05-1986

## Description

L'invention concerne les dispositifs d'alimentation en fluide, notamment en gaz, à clapet pilote, du type défini par le préambule de la revendication 1.

Le document JP-A-56 76779 décrit un tel dispositif ayant une vanne principale pilotée par une valve pilote, constituée par un élément d'obturation porté par un bras en matériau diélectrique. L'ensemble de l'élément d'obturation et du bras est immergé dans une chambre qui communique en permanence avec l'alimentation et qui est donc à la pression d'alimentation aussi longtemps que la valve pilote n'est pas ouverte.

L'invention trouve une application particulièrement importante dans le domaine de l'aéronautique où de tels dispositifs sont utilisés notamment pour fournir à chaque membre d'équipage un mélange respiratoire de composition et de pression appropriées. Ils sont également utilisés, sur les avions de combat, pour fournir du gaz de gonflage d'un vêtement combattant les effets de l'accélération.

Les dispositifs actuels d'alimentation en gaz respiratoire sont purement pneumatiques. Ces dispositifs ont un grand nombre de caractéristiques favorables : ils sont parfaitement au point, très sûrs et de coût modéré. Ils n'exigent aucune alimentation extérieure autre qu'en oxygène ou air sous pression. On leur a cependant reproché leur caractère relativement figé une fois qu'un dispositif a été réalisé et la difficulté de prendre en compte des paramètres d'anticipation sur les mouvements de l'avion, tels que par exemple la position du manche à balai de commande, le régime des moteurs, l'attitude de l'avion, etc., représentés par des signaux électriques.

On a par ailleurs déjà proposé un dispositif d'alimentation en gaz à clapet pilote commandé électriquement (US-A-4 336 590), dont le clapet pilote est constitué par une électrovanne à deux positions excitée par une unité de calcul qui reçoit des informations fournies par des capteurs de pression portés par le dispositif.

Cette solution permet de prendre en considération des données supplémentaires fournies par des capteurs à sortie électrique. Mais cette constitution se heurte à des problèmes d'usure du clapet pilote (due au déplacement alternatif du tiroir de l'électrovanne) et de consommation électrique, relativement élevée.

La présente invention vise à fournir un dispositif d'alimentation en gaz répondant mieux que ceux antérieurement connus aux exigences de la pratique, notamment en ce qu'il conserve les caractéristiques favorables des dispositifs à commande électronique, et notamment leur souplesse d'adaptation, sans pour autant entrainer les inconvénients habituels de ces dispositifs à commande électrique.

Dans ce but, l'invention propose un dispositif d'alimentation du type ci-dessus défini, suivant la partie caracterisante de la revendication 1.

Le disposition de l'element piézo-electrique suivant la revendication 1 semble a priori défavorable, car la pression dans la chambre de commande tend alors à ouvrir le clapet pilote. Mais, du fait de la très faible surface d'action de la pression, cet inconvénient est en fait inexistant. Et la disposition a l'avantage de soustraire l'élément à l'action du fluide à la haute pression de la source, action qui pourrait dégrader rapidement l'élément lorsque le fluide est par exemple de l'oxygène sous pression si on utilisait une disposition du genre montrée dans le document JP-A-56-76779, qui pose au surplus le problème de l'étanchéité des liaisons électriques.

L'élément piézo-électrique peut prendre diverses formes. Il peut être constitué par un barreau ou disque qui se contracte ou se dilate lorsqu'une différence de potentiel est appliquée entre deux électrodes revêtant ses faces planes. Cette solution ne donne qu'un débattement faible qui peut être augmenté par l'emploi d'un empilement de pastilles. L'élément peut être d'un type qui se déforme en flexion lorsqu'une tension électrique lui est appliquée. Il peut s'agir d'une lame encastrée à une extrémité et coopérant avec le siège de clapet pilote à l'autre extrémité. L'élément est avantageusement une membrane piezorésistive déformable.

Il existe à l'heure actuelle dans le commerce des membranes piézorésistives en forme de disque comportant deux couches solidaires l'une de l'autre, munies d'électrodes de surface permettant de les relier à un circuit électrique. Si on applique une différence de potentiel entre les électrodes portées par les deux couches, la membrane se déforme en se bombant. La déformation est une fonction croissante de la différence de potentiel appliquée, de sorte que l'on réalise de façon simple une commande analogique. Parmi ces membranes, certaines comprennent une couche de céramique piézo-électrique (titanate-zirconate de plomb par exemple) et un support métallique. D'autres sont à deux couches piézo-électriques.

L'utilisation d'une telle membrane comme obturateur apporte de nombreux avantages : l'absence de coulissement fait disparaître les frottements et écarte les problèmes d'usure ; si une tension de commande pouvant atteindre environ 100 volts est nécessaire, il n'y a pas de consommation appréciable de courant électrique, de sorte qu'il suffit d'une source électrique de faible puissance.

L'invention sera mieux comprise à la lecture de la description qui suit de modes particuliers de réalisation donnés à titre d'exemples non limitatifs. La description se réfère aux dessins qui l'accompagnent, dans lesquels :
- la Figure 1 est un schéma de principe d'un dispositif suivant un premier mode de mise en oeuvre de l'invention, utilisable dans un régulateur respiratoire à la demande ;
- les Figures 2, 3 et 4 montrent des dispositifs suivant des variantes de mise en oeuvre de l'invention, constituant respectivement détendeur de régulateur, dispositif régulateur à deux étages pneumatiques en cascade et soupape à clapet pilote commandée ;
- la Figure 5, similaire aux Figures 2, 3 et 4, montre une variante ayant une source indépendante d'alimentation en gaz du clapet pilote, avec échappement perdu.

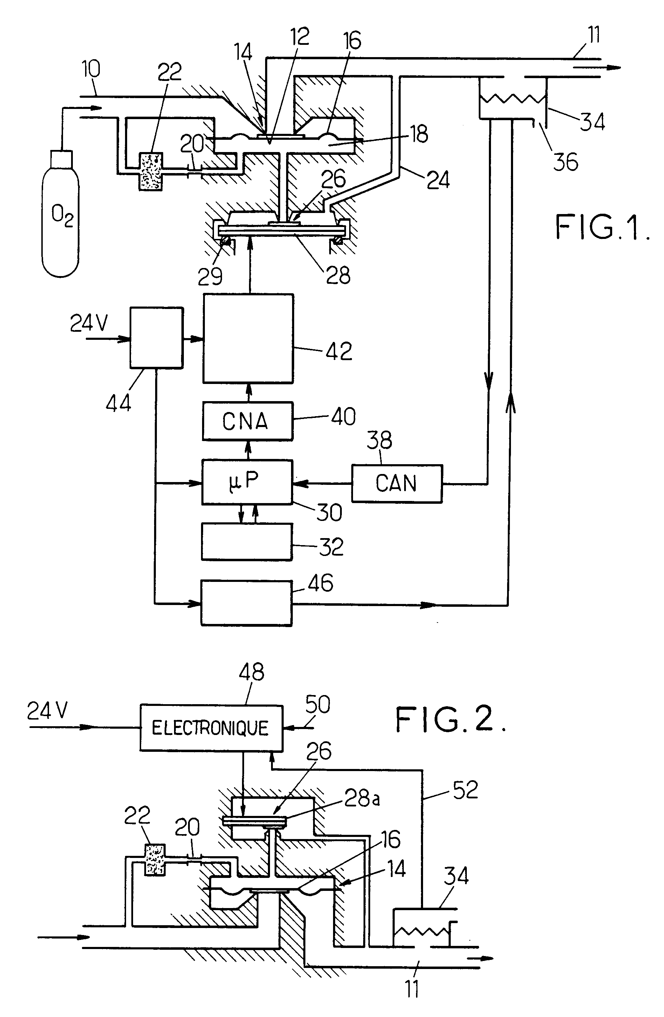

Le dispositif montré schématiquement en Figure 1 peut être incorporé dans un régulateur à la demande ayant par exemple la constitution générale décrite dans le document US-A-4 336 590 déjà mentionné. Le dispositif comprend une partie pneumatique et une unité de commande à calculateur numérique ou analogique qui seront successivement décrites.

La partie pneumatique comprend, de façon classique, un boîtier muni d'un raccord 10 d'alimentation par une source d'oxygène sous pression, généralement sous une pression de 2 à 5 bars, et d'une sortie 11 vers un masque respiratoire à alimenter. Le raccord d'alimentation 10 se prolonge par un conduit qui débouche autour d'un siège 12 de réception d'un clapet principal 14 dont l'obturateur est constitué par une membrane élastique 16 dont la face opposée au siège est soumise à la pression qui règne dans une chambre de commande 18.

L'ouverture et la fermeture du clapet principal 14 sont commandées par action sur la pression qui règne dans la chambre de commande 18. Cette chambre est reliée en permanence au raccord d'admission 10 par un étranglement 20, fréquemment constitué par un trou de 0,2 mm de diamètre, et par un filtre 22 évitant le colmatage du trou.

Un clapet pilote permet de commander la pression qui règne dans la chambre de commande 18. Ce clapet pilote commande la communication entre la chambre de commande 18 et une chambre de décharge reliée par un passage 24 à la sortie 11 ou à l'ambiance à basse pression. Il comprend un obturateur 26 constitué par une membrane piézorésistive 28 à laquelle est fixée une pastille destinée à s'appliquer contre un siège pour fermer un passage de liaison entre la chambre de commande 18 et la chambre de décharge. La périphérie de la membrane piézorésistive 28 est immobilisée dans le boîtier. Lorsqu'une tension de commande est appliquée entre des électrodes revêtant les deux faces de la membrane, dans un sens approprié, celle-ci tend à se déformer et à soulever la pastille centrale de son siège. En général, on obtiendra des résultats satisfaisants avec une membrane ayant un diamètre compris entre 15 et 30 mm et une épaisseur comprise entre 0,2 et 0,6 mm, avec un siège delimitant un orifice central de 0,6 mm, ce qui conduit à un débit de fuite faible. Dans le cas, qui est celui de la Figure 1, où le débit de gaz à travers le clapet pilote est utilisé puisqu'il rejoint la sortie 11, on peut augmenter la section de l'étranglement 20 et celle du trou délimité par le siège et admettre un débit de fuite atteignant 1 l/mn pour piloter un débit principal de 200 à 1.000 l/mn.

Un ressort (non représenté) peut être prévu pour appliquer la pastille sur le siège au repos, la mise sous tension de la membrane provoquant son "cloquage" dans une direction qui décolle la pastille du siège.

Le bord de la membrane peut être emprisonné dans la paroi du boîtier délimitant la chambre de commande. La Figure 1 montre un montage plus avantageux car il permet d'augmenter le débattement. Le bord de la membrane 28 est maintenu en appui simple contre une arête circulaire par un joint torique isolant 29 qui, en même temps, isole électriquement les électrodes l'une de l'autre.

L'amplitude de déplacement étant toujours faible, il est souhaitable d'éviter qu'elle ne soit réduite par des phénomènes d'élasticité ou modifiée par des dilatations thermiques différentielles. Une solution permettant de réduire ces phénomènes consiste à constituer l'élément d'obturation par une bille ayant un diamètre de l'ordre du millimètre, en saphir, coopérant avec un tube en métal résistant à l'action du fluide. Le boîtier peut être lui-même en alliage de type "Inconel".

L'unité de commande et de programmation du dispositif comporte un organe de calcul 30 qui peut être analogique et/ou numérique, et qu'on supposera numérique dans ce qui suit. A ce calculateur est associée une mémoire 32, comprenant une mémoire vive de travail et une mémoire morte de stockage de programme. La mémoire morte permet notamment de stocker une loi de variation de pression en fonction de l'altitude.

Dans le mode de réalisation montré en Figure 1, le microprocesseur reçoit, comme seule donnée d'entrée, un signal de pression différentielle fourni par un capteur 34 portant une membrane sensible soumise, sur une face, à la pression qui règne dans la sortie 11, sur l'autre face, à une pression de référence amenée par un passage 36 (pression ambiante ou pression de commande d'une surpression respiratoire). Le signal analogique fourni par le capteur 34 est appliqué à un convertisseur analogique/numérique 38 qui alimente le calculateur 30. Le signal de commande fourni par ce dernier est appliqué à un convertisseur numérique/analogique 40 qui attaque un étage survolteur 42 destiné à élaborer la tension de commande de la membrane piézorésistive 28, de l'ordre de 100 Volts en général. La tension d'alimentation fournie par une source (non représentée), souvent de 28 Volts sur avion, est appliquée à un circuit d'alimentation stabilisé 44 qui fournit l'énergie nécessaire au survolteur 42, au calculateur 30 et à un circuit 46 fournissant la tension de fonctionnement du capteur de mesure 34. D'autres capteurs (non représentés) peuvent fournir des données supplémentaires, représentant par exemple la pression ambiante, l'accélération appliquée au pilote, etc. Les capteurs peuvent être munis de convertisseurs analogiques/numériques indépendants ou leurs signaux de sortie peuvent être appliqués à un même multiplexeur, de façon à n'utiliser qu'un seul CAN 38. Les capteurs utilisés peuvent être de divers types : on peut par exemple utiliser des capteurs capacitifs de pression ou des capteurs à membrane piézorésistive, dont la déformation par allongement d'une couche et compression de l'autre fait apparaître une différence de potentiel qui est amplifiée. De tels capteurs sont actuellement disponibles commercialement.

Un dispositif comparable à celui de la Figure 1 est utilisable pour constituer une valve anti-g ayant une constitution d'ensemble similaire à celle décrite dans le document US-A-4 336 590 déjà mentionné.

Les Figures 2 à 4 montrent des variantes de réalisation permettant de remplir d'autres fonctions. Pour plus de simplicité, la constitution de l'organe de commande et de programmation n'est pas détaillée sur ces Figures.

Le dispositif montré en Figure 2 constitue un détendeur permettant de fournir, à la demande, une pression déterminée à la sortie 11 du dispositif. La constitution de la partie pneumatique est la même que dans le cas de la Figure 1, si ce n'est que l'obturateur 26 du clapet pilote comporte une lame piézoélectrique encastrée à double couche 28a. L'unité électronique 48 est prévue pour n'appliquer aucune différence de potentiel à la membrane 28 en l'absence d'un ordre de commande sur son entrée 50. Le clapet pilote est fermé au repos et la membrane 16 constituant obturateur du clapet principal 14 est appliquée sur son siège. Lorsqu'un ordre de commande est appliqué sur l'entrée 50, l'unité électronique 48 commande la différence de potentiel appliquée à la membrane piézorésistive 28 pour provoquer un fonctionnement en régulateur à la demande. Un signal de rétroaction fourni par le capteur 34 est ramené à l'unité de commande 48 par un conducteur 52. Lorsque le capteur 34 détecte une pression inférieure à une valeur déterminée, l'organe 48 réagit en appliquant, aux électrodes de l'obturateur, une tension qui provoque la déformation de la lame 28 en flexion dans un sens tel que l'obturateur 26 se soulève de son siège.

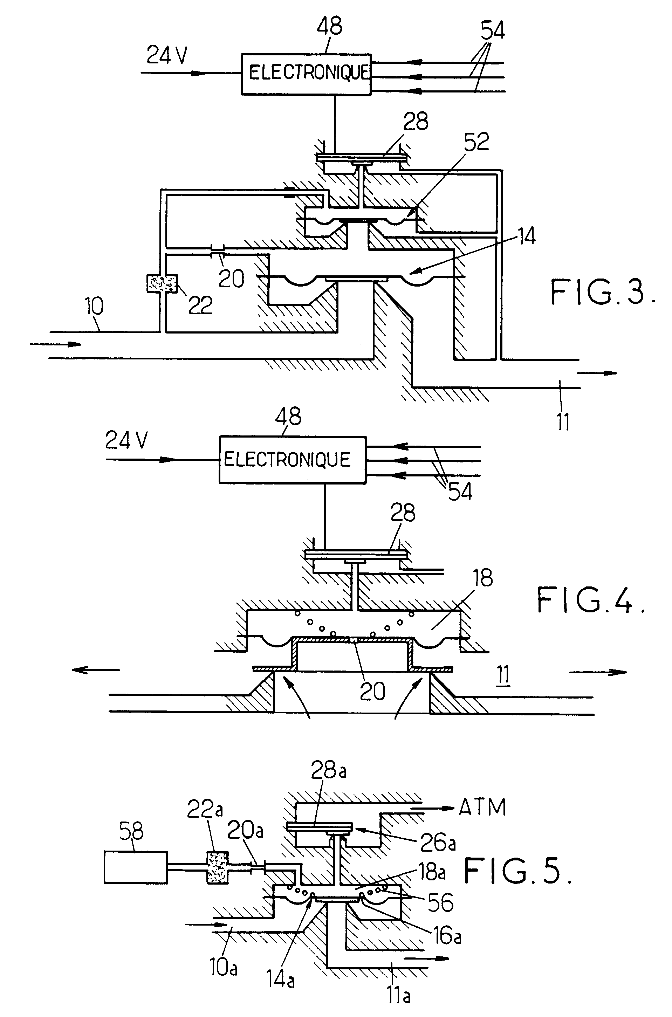

Le dispositif montré en Figure 3 se différencie de celui de la Figure 1 essentiellement en ce que le clapet principal 14 n'est pas commandé directement par le clapet pilote. Un clapet relais 52 permet d'assurer un effet d'amplification. Trois entrées 54 provenant de capteurs différents ont été représentées, la mémoire de l'unité électronique 48 stockant, par exemple sous forme cartographique, la pression de sortie en fonction des trois signaux reçus. Le bouclage du dispositif de la Figure 3 est assuré par un capteur, non représenté, sensible à la pression à la sortie 11.

La Figure 4 décrit un dispositif constituant soupape dans lequel la chambre de commande 18 communique avec l'entrée par un orifice étranglé 20 ménagé dans l'obturateur, aucun bouclage n'étant prévu à partir de la pression aval. Mais un ou plusieurs des signaux de commande appliqués sur les entrées 54 peuvent représenter des paramètres influencés par la pression à la sortie 11.

Enfin, la Figure 5 montre un dispositif utilisable même lorsque la surpression en amont du clapet principal est faible. Le dispositif de la Figure 5, où les éléments correspondant à ceux des Figures 1 à 4 portent le même numéro de référence affecté de l'indice a, comprend encore un clapet principal 14a commandant la communication entre un raccord d'admission 10a et une sortie 11a. Un ressort 56 tend à maintenir le clapet principal en position de fermeture. L'ouverture de ce clapet est commandée par diminution de pression dans la chambre de commande 18a. Cette chambre est reliée en permanence, par un étranglement 20a et un filtre 22a, à une source 58 d'alimentation en gaz sous pression. Elle est séparée de l'atmosphère par le clapet pilote lorsque l'obturateur 26a de ce dernier est appliqué sur son siège. La constitution du clapet pilote peut être l'une quelconque de celles déjà décrites.

## Revendications

1. Dispositif d'alimentation en fluide à clapet pilote, comportant : un clapet principal (14) de mise en communication d'une source située en amont avec un récepteur placé en aval, constitué par un siège (12) et un obturateur à membrane déformable (16) d'obturation du siège, soumis à la pression qui règne dans une chambre de commande (18) reliée à une source, telle que l'amont du clapet principal, par un passage étranglé ; et un clapet pilote de mise en communication de la chambre de commande avec l'aval du clapet principal (14) ou l'ambiance, **caractérisé en ce que** l'organe obturateur (26) du clapet pilote comprend un élément piézoélectrique (28) placé en aval et en dehors de la chambre de commande et déformable entre un état où il ferme le clapet et un état où il l'ouvre **et en ce que** ledit dispositif comprend une unité de commande ayant un calculateur (30), munie d'entrées de réception de signaux représentatifs de paramètres de commande et d'etat et destinée à appliquer une tension de commande analogique a l'élément piézoélectrique.

2. Dispositif selon la revendication 1, caractérisé en ce que l'élément piézoélectrique est constitué par un disque ou un empilement de disques de matériau piézoélectrique.

3. Dispositif selon la revendication 1, caractérisé en ce que l'élément piézoélectrique est constitué par une lame déformable en flexion.

4. Dispositif selon la revendication 1, caractérisé en ce que l'élément piézoélectrique est constitué par une membrane piézorésistive déformable (28).

5. Dispositif selon l'une quelconque des revendications 1 à 4, caractérisé en ce que l'unité de commande a un survolteur (30) de sortie.

6. Dispositif selon la revendication 5, caractérisé en ce que le calculateur est analogique.

7. Dispositif selon la revendication 5, caractérisé en ce que le calculateur est numérique et est associé à une mémoire (32) de stockage de programme.

8. Dispositif selon la revendication 5, 6 ou 7, pour régulateur respiratoire à la demande, caractérisé en ce que les signaux d'entrée comprennent au moins le signal de sortie d'un capteur (34) de pression en aval du clapet principal.

9. Dispositif selon l'une quelconque des revendications 1 à 7, caractérisé en ce que le récepteur est à au moins deux étages (Figure 3).

10. Dispositif selon l'une quelconque des revendications précédentes, caractérisé en ce que ladite source connectée à la chambre de commande est distincte de celle qui alimente le clapet principal et en ce que le clapet pilote débouche à l'ambiance.

## Claims

1. A fluid supply device having a pilot valve and comprising: a main valve (14) for communicating an upstream source with a downstream receiver, comprising a seat (12) and a closure member having a deformable diaphragm (16) for closing the seat, subjected to the pressure which prevails in a control chamber (18) connected to a source, such as the zone upstream of the main valve, via a throttled passage; and a pilot valve for communicating the control chamber with the zone downstream of the main valve or ambient,
characterized in that the closure member (26) of the pilot valve comprises a piezoelectric element (28) located downstream and out of the control chamber and deformable between a condition where it closes the valve and a condition in which it opens it and in that said device comprises a control unit having a computer (30), provided with inputs for receiving signals representative of control and state parameters, for applying an analog control voltage to the piezoelectric element.

2. Device according to claim 1,
characterized in that the piezoelectric element consists of a disk or a stack of disks of piezoelectric material.

3. Device according to claim 1,
characterized in that the piezoelectric element consists of a flexure deformable blade.

4. Device according to claim 1,
characterized in that the piezoelectric element consists of a deformable piezoresistive diaphragm (28).

5. Device according to any one of claims 1-4,
characterized in that the control unit has an output voltage increasing unit.

6. Device according to claim 5,
characterized in that the computer is analog.

7. Device according to claim 5,
characterized in that the computer is digital and is associated with a memory (32) for storing a program.

8. Device according to claim 5, 6 or 7, for a demand breathing regulator,
characterized in that the output signals comprise at least the output signal of a sensor (34) for sensing the pressure downstream of the main valve.

9. Device according to any one of claims 1-7,
characterized in that the receiver has at least two stages (Figure 3).

10. Device according to any one of the preceding claims,
characterized in that said source connected to the control chamber is distinct from that which feeds the main valve and in that the pilot valve opens to the ambient atmosphere.

## Patentansprüche

1. Flüssigkeitsversorgungseinichtung mit Pilotventil, bestehend aus einem Hauptventil (14) zum In-Verbindung-Setzen einer stromauf angeordneten Quelle mit einem stromab angeordneten Empfänger, das von einem Sitz (12) und einem Verschluß mit verformbarer Membran (16) zum Verschließen des Sitzes gebildet wird, der dem in einer Steuerkammer (18) herrschenden Druck ausgesetzt ist, die durch einen verengten Durchlaß mit einer Quelle wie dem Abschnitt vor dem Hauptventil verbunden. ist; und aus einem Pilotventil zum In-Verbindung-Setzen der Steuerkammer mit dem Abschnitt nach dem Hauptventil (14) oder der Umgebung,
dadurch gekennzeichnet, daß das Verschlußteil (26) des Pilotventils aus einem piezoelektrischen Teil (28) besteht, das außerhalb und nach der Steuerkammer angeordnet ist und zwischen einem Zustand, in dem es das Ventil schließt, und einem Zustand, in dem es dieses öffnet, verformbar ist,
und daß die genannte Vorrichtung eine Steuereinheit mit einem Rechner (30) aufweist, die mit Eingängen zum Empfang von Signalen versehen ist, die Steuer- und Zustandparameter darstellen, und die an ein piezoelektrisches Teil eine Analogsteuerspannung anlegen soll.

2. Vorrichtung nach Anspruch 1,
dadurch gekennzeichnet, daß das piezoelektrische Teil aus einer Scheibe oder einem Stabel von Scheiben aus piezoelektrischem Material besteht.

3. Vorrichtung nach Anspruch 1,
dadurch gekennzeichnet, daß das piezoelektrische Teil aus einer verbiegbaren Zunge besteht.

4. Vorrichtung nach Anspruch 1,
dadurch gekennzeichnet, daß das piezoelektrische Teil aus einer verformbaren, piezoresistiven Membran (28) besteht.

5. Vorrichtung nach einem der Ansprüche 1 bis 4,
dadurch gekennzeichnet, daß die Steuereinheit einen Ausgangs-Spannungserhöher (42) aufweist.

6. Vorrichtung nach Anspruch 5,
dadurch gekennzeichnet, daß der Rechner ein Analogrechner ist.

7. Vorrichtung nach Anspruch 5,
dadurch gekennzeichnet, daß der Rechner digital ist und mit einem Speicher (32) zum Programmspeichern verbunden ist.

8. Vorrichtung nach Anspruch 5, 6 oder 7 für Atemregler nach Bedarf,
dadurch gekennzeichnet, daß die Eingangssignale mindestens das Ausgangssignal eines Drucksensors (34) nach dem Hauptventil enthalten.

9. Vorrichtung nach einem der Ansprüche 1 bis 7,
dadurch gekennzeichnet, daß der Empfänger mindestens zwei Stufen hat (Fig. 3).

10. Vorrichtung nach einem der vorstehenden Ansprüche,
dadurch gekennzeichnet, daß die genannte, mit der Steuerkammer verbundene Quelle sich von der unterscheidet, die das Hauptventil speist, und daß das Pilotventil in den Raum mündet.
